# EUROPÄISCHE PATENTANMELDUNG

(11) **EP 1 210 855 A2**
(43) Veröffentlichungstag der Anmeldung: **05.06.2002**
(21) Anmeldenummer: 01128606.9
(22) Anmeldetag: 30.11.2001
(51) Int. Cl.: A01B 73/04, A01B 51/04

(54) **Landwirtschaftliche Bestellkombination**

(30) Priorität: 02.12.2000 DE 10060058
(71) Anmelder: Amazonen-Werke H. Dreyer GmbH & Co. KG, 49205 Hasbergen (DE)
(72) Erfinder: Gattermann, Bernd, 27798 Hude (DE); Tiessen, Reimer Uwe, 26135 Oldenburg (DE); Reinke, Wilfried, 26123 Oldenburg (DE)

(57) **Zusammenfassung**

Landwirtschaftliche Bestellkombination mit einem sich zumindest während des Transportes auf Laufrädern (3) abstützenden Rahmen (1), an welchem drei Bodenbearbeitungswerkzeuge und/oder Säelemente tragende Tragsektionen (6,6',6") angeordnet sind, wobei die mittlere Tragsektion (6) hinter den Laufrädern (3) am Rahmen (1) mittels Tragelementen (15) aushebbar und auslenkbar angeordnet ist, während die beiden seitlichen Tragsektionen (6',6") vor den Laufrädern (3) am Rahmen (1) mittels Tragelemente (19) aushebbar und absenkbar angeordnet sind.

## Beschreibung

In der Praxis sind landwirtschaftliche Bestellkombinationen bekannt geworden, die einen sich zumindest während des Transportes auf Laufrädern abstützenden Rahmen aufweisen, an welchem drei Bodenbearbeitungswerkzeuge und/oder Säelemente tragende Tragsektionen angeordnet sind.

Hierbei sind die Tragsektionen in einer quer zur Fahrtrichtung fluchtenden Reihe angeordnet. Um derartige Bestellkombinationen, die Arbeitsbreiten von 3m bis 12m aufweisen, in eine kompakte Transportposition einklappen zu können sind aufwendige Klappmittel sowie Verschwenk- und Verschiebemechanismen erforderlich.

Der Erfindung liegt die Aufgabe zugrunde, für landwirtschaftliche Bestellkombinationen mit großer Arbeitsbreite mit einfachen Mitteln zu gewährleisten, dass eine kompakte Transportposition für die seitlichen Tragsektionen mit einfachen Mitteln erreicht wird.

Diese Aufgabe wird erfindungsgemäß durch die Merkmale des Patentanspruches 1 gelöst. Infolge dieser Maßnahmen lassen sich die seitlichen Tragsektionen durch eine entsprechende Anlenkung in eine sich sehr dicht an der Mittelachse der Bestellkombination befindlichen Transportposition bringen. Um die seitlichen Tragsektionen in einfacher Weise aus der Arbeitsposition in die Transportposition und umgedreht mit einfachen Mitteln überführen zu können, ist vorgesehen, dass die seitlichen Tragsektionen um zumindest annähernd in Fahrtrichtung verlaufende Schwenkachsen aus einer Arbeitsstellung in eine aufrechte Transportposition schwenkbar sind.

Um die hintere Tragsektion in einfacher Weise aus der Arbeits- in die Transportstellung und umgedreht bringen zu können, ist vorgesehen, dass die hintere Tragsektion um eine quer zur Fahrtrichtung verlaufende Schwenkachse nach oben schwenkbar ist.

Hierbei ist von Vorteil, dass die Schwenkachse der hinteren Tragsektion sich vor den Bodenbearbeitungs- und/oder Säelementen befindet.

Damit die Bestellkombination auf öffentlichen Straßen ohne große Umbauarbeiten transportiert werden kann, ist vorgesehen, dass die die Schwenkachse aufweisenden Gelenke für die seitlichen Tragsektionen jeweils derart angeordnet sind, dass nach dem Schwenken der seitlichen Tragsektion in die Transportposition die an den Tragsektionen angeordneten Bodenbearbeitungswerkzeuge und/oder Säelemente sich innerhalb der Transportbreite von 3 m befinden.

Um in einfacher Weise die seitlichen Tragsektionen am Rahmen anlenken zu können, ist vorgesehen, dass die Schwenkachse für die seitlichen Tragsektionen sich innerhalb der von der Mittelsektion begrenzten 3 m Transportarbeitsbreite befindet, und dass die seitlichen Tragsektionen zur Mitte hin verlängert sind.

Weitere Einzelheiten sind der Beispielsbeschreibung und den Zeichnungen zu entnehmen. Hierbei zeigen
- Fig. 1: die Bestellkombination in Arbeitsposition in der Draufsicht und in Prinzipdarstellung,
- Fig. 2: die Bestellkombination in der Draufsicht, wobei die seitlichen Tragsektionen in Transportstellung sich befinden,
- Fig. 3: die Bestellkombination in Seitenansicht und in Prinzipdarstellung, wobei sich die seitlichen in Transportstellung und die hintere Sektion in Arbeitsstellung befindet und
- Fig 4: die Bestellkombination in Seitenansicht und in Transportstellung so wie in Prinzipdarstellung.

Die Bestellkombination weist den zentralen Tragrahmen 1 auf. An diesem Tragrahmen 1 ist an der Vorderseite eine Kupplungseinrichtung 2 zum Ankuppeln des Tragrahmens 1 an die Unterlenker eines Dreipunktkrafthebers oder an eine Zugvorrichtung eines Ackerschleppers angeordnet. Im rückwärtigen Teil des Tragrahmens 1 befinden sich die Laufräder 3, über die sich der Rahmen 1 auf dem Boden abstützt. Die Laufräder 3 können mittels geeigneter Hebe- und Senkvorrichtungen, beispielsweise Hydraulikzylindern gegenüber dem Tragrahmen 1 anhebbar und absenkbar angeordnet sein.

Im vorderen Bereich des Tragrahmens 1 ist der Vorratsbehälter 4 angeordnet.

An dem Tragrahmen 1 ist auf dessen Rückseite und hinter den Laufrädern mittels der Kuppelelemente 5 die mittlere Tragsektion angeordnet, während vor den Laufrädern 3 an dem Rahmen 1 mittels Kuppelelementen 7 jeweils die seitlichen Tragsektionen 6' und 6'' angeordnet sind. An den Tragsektionen 6,6' und 6'' sind jeweils Bodenbearbeitungswerkzeuge und/oder Säelemente angeordnet. Im Ausführungsbeispiel bestehen die Bodenbearbeitungswerkzeuge aus Bodenbearbeitungszinken, die nicht dargestellt sind. Hinter den Tragsektionen 6,6' und 6'' sind mittels der Anlenkelemente 8 die Andrückräder 9 und die als Säscheiben 10 ausgebildeten Säelemente mit zugeordneten Zustreichelementen 11 angeordnet. Den Säelementen 10 werden von dem Vorratsbehälter 4 in bekannter und daher nicht dargestellter Weise über Förder-, Dosier- und Verteileinrichtungen das auszubringende Material in einstellbaren Mengen zugeführt.

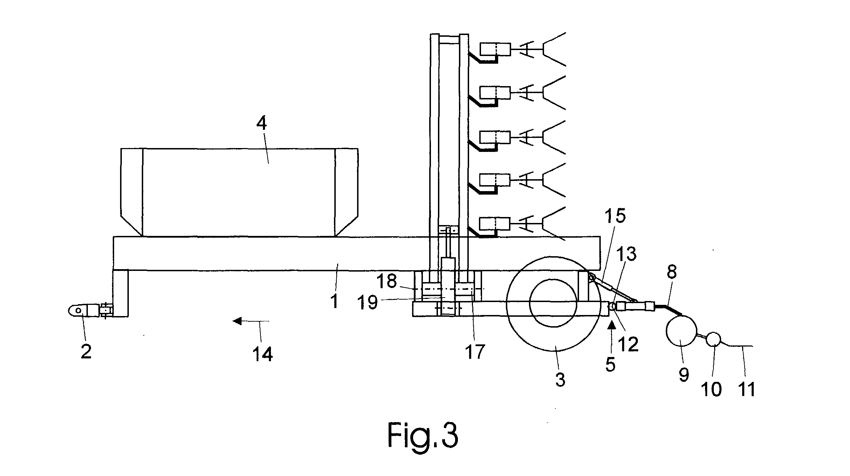

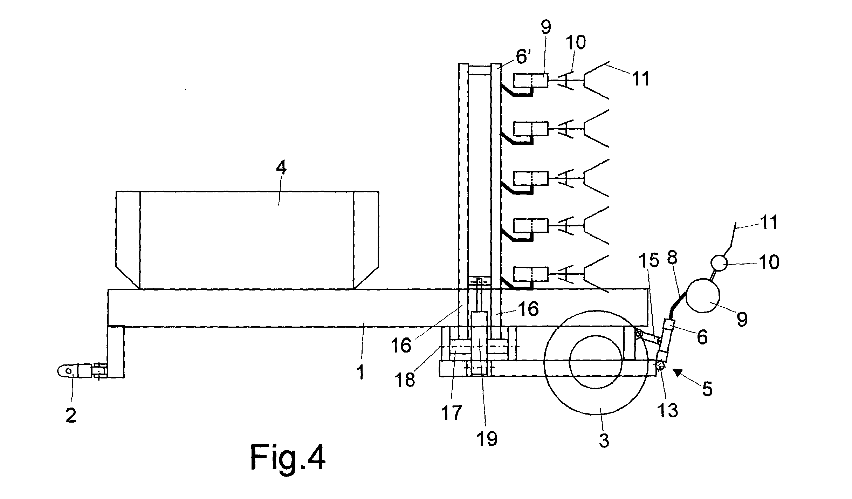

Die hintere Tragsektion 6 ist mittels der die Gelenke 12, deren Schwenkachse 13 quer zur Fahrtrichtung 14 verlaufen, aufweisenden Kupplungselemente 5 an dem Tragrahmen 1 angelenkt. Zwischen dem Rahmen 1 und der hinteren Tragsektion 6 ist eine als Hydraulikzylinder 15 ausgebildete Schwenkeinrichtung angeordnet, mittels welcher die hintere Tragsektion 6 mit den zugeordneten Bodenbearbeitungs- und Säwerkzeugen aus der in Fig. 3 dargestellten Arbeitsposition in die in Fig. 4 dargestellte Transportposition nach oben geschwenkt werden kann.

Die Schwenkachse 13 der hinteren Tragsektion 6 befindet sich vor den Bodenbearbeitungs- und/oder Säelementen 10.

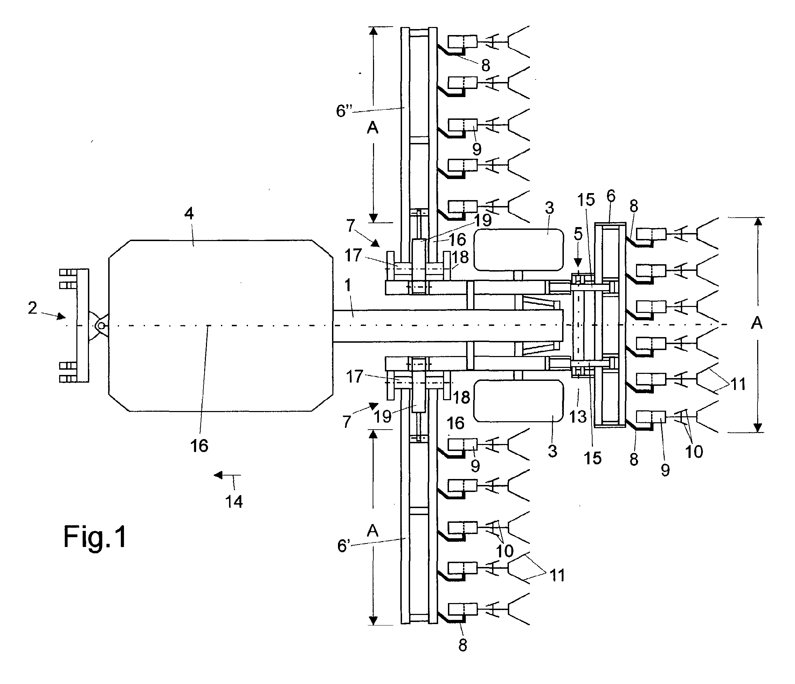

Die seitlichen Tragsektionen sind, wie Fig. 1 zeigt, über ihre Arbeitsbreite A zur Mitte 16 hin mittels Verlängerungselemente 16 und über diese über die Schwenkgelenke 17, deren Schwenkachse 18 in Fahrtrichtung 14 verlaufend, an dem Rahmen 1 angekuppelt. Zwischen dem Rahmen 1 und den seitlichen Tragsektionen 6' und 6'' befinden sich die als Hydraulikzylinder 19 ausgebildeten Schwenkelemente.

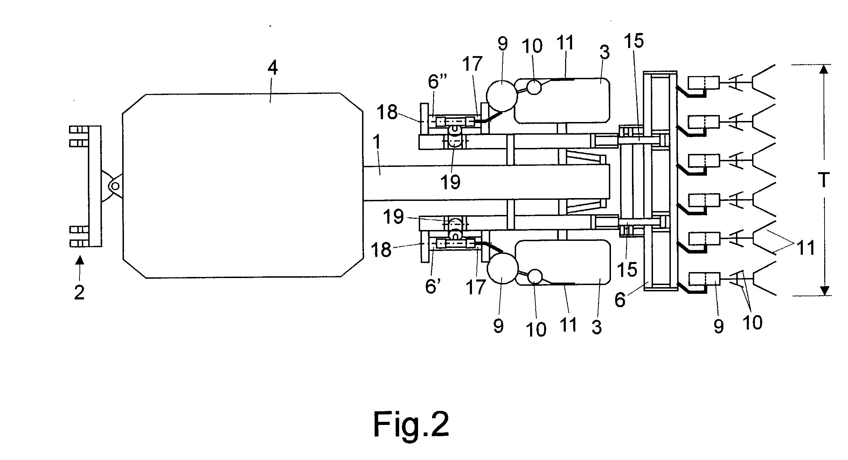

Die seitlichen Tragsektionen 6' und 6'' sind um die zumindest annähernd in Fahrtrichtung 14 verlaufende Schwenkachse 18 aus der in den Fig. 1 dargestellten Arbeitsposition in die in den Fig. 2 bis 4 dargestellte Transportposition nach oben zu schwenken. Hierbei sind die die Schwenkachse 18 aufweisenden Gelenke 17 für die seitlichen Tragsektionen 6' und 6'' jeweils derart angeordnet, dass nach dem Schwenken der seitlichen Tragsektion in die Transportposition 6' und 6'' die an den Tragsektionen 6' und 6'' angeordneten Bodenbearbeitungswerkzeuge 9,11 oder Säelemente 10 innerhalb der Transportbreite T von 3 m befindet.

**[Stand der Technik]**

**[Aufgabe der Erfindung]**

**[Beispiele]**

## Patentansprüche

1. Landwirtschaftliche Bestellkombination mit einem sich zumindest während des Transportes auf Laufrädern abstützenden Rahmen, an welchem drei Bodenbearbeitungswerkzeuge und/oder Säelemente tragende Tragsektionen (6,6',6'') angeordnet sind, wobei die mittlere Tragsektion (6) hinter den Laufrädern (3) am Rahmen (1) mittels Tragelementen (15) aushebbar und auslenkbar angeordnet ist, während die beiden seitlichen Tragsektionen (6',6'') vor den Laufrädern (3) am Rahmen (1) mittels Tragelemente (19) aushebbar und absenkbar angeordnet sind.

2. Bestellkombination nach Anspruch 1, **dadurch gekennzeichnet, dass** die seitlichen
Tragsektionen (6',6'') um zumindest annähernd in Fahrtrichtung (14) verlaufende
Schwenkachsen (18) aus einer Arbeitsstellung in eine aufrechte Transportposition
schwenkbar sind.

3. Bestellkombination nach Anspruch 1, **dadurch gekennzeichnet, dass** die hintere
Tragsektion (6) um eine quer zur Fahrtrichtung (14) verlaufende Schwenkachse (13) nach oben schwenkbar ist.

4. Bestellkombination nach Anspruch 3, **dadurch gekennzeichnet, dass** die
Schwenkachse (13) der hinteren Tragsektion (6) sich vor dem Bodenbearbeitungs- (9,11) und/oder Säelementen (10) sich befindet.

5. Bestellkombination nach Anspruch 2, **dadurch gekennzeichnet, dass** die die Schwenkachse (18) aufweisenden Gelenke (17) für die seitlichen Tragsektionen (6',6'') jeweils derart angeordnet sind, dass nach dem Schwenken der seitlichen Tragsektionen (6',6'') in die Transportposition die an den Tragsektionen angeordneten Bodenbearbeitungswerkzeuge (9,11) und/oder Säelemente (10) sich innerhalb der Transportbreite (T) von 3 m befinden.

6. Bestellkombination nach Anspruch 2, **dadurch gekennzeichnet, dass** die Schwenkachse (18) für die seitlichen Tragsektionen (6',6'') sich innerhalb der von der Mittelsektion (6) begrenzten 3 m Transportbreite (T) befindet, und dass die seitlichen Tragsektionen (6',6'')zur Mitte hin verlängert sind.
